# DEMANDE DE BREVET EUROPEEN

(11) **EP 4 712 416 A1**
(43) Date de publication de la demande: **18.03.2026**
(21) Numéro de dépôt: 25202516.8
(22) Date de dépôt: 16.09.2025
(51) Int. Cl.: H04L 12/28

(54) **PROCÉDÉ DE CONTRÔLE D'UN SYSTÈME DOMOTIQUE**

(30) Priorité: 17.09.2024 FR 2409885
(71) Demandeur: DELTA DORE, 35270 Bonnemain (FR)
(72) Inventeur: DESBORDES, Clément, 35270 BONNEMAIN (FR); JARY, Frédéric, 35270 BONNEMAIN (FR); FRANCOIS, Florian, 35270 BONNEMAIN (FR)
(74) Mandataire: Cabinet Le Guen Maillet

(57) **Abrégé**

Un procédé (100) de contrôle d'un système domotique comprenant une passerelle et au moins un équipement domotique connecté à la passerelle au travers d'un réseau local, la passerelle comprenant de la circuiterie électronique adaptée pour implémenter le procédé de contrôle. Le procédé de contrôle comprend au moins les étapes suivantes :
- (Etape 1) Associer l'équipement domotique à la passerelle
- (Etape 2) Enregistrer, dans la passerelle au moins un scénario conditionnel local de fonctionnement de l'équipement et au moins un équipement déclencheur associé au scénario ;
- (Etape 3) Recevoir, au travers du réseau local, au moins un message déclencheur provenant de l'au moins un équipement déclencheur associé au scénario conditionnel ;
- (Etape 4) Stocker l'au moins un message déclencheur reçu dans une mémoire temporaire de la passerelle ;
- (Etape 5) Activer l'exécution du scénario conditionnel associé à l'au moins un équipement déclencheur, au travers du réseau local ;
- (Etape 6) Supprimer l'au moins un message déclencheur reçu, de la mémoire temporaire.

## Description

### DOMAINE TECHNIQUE

L'invention concerne le domaine de la domotique.

### ETAT DE LA TECHNIQUE ANTERIEURE

Les équipements domotiques sont de plus en plus répandus. La domotique recouvre toute l'automatisation du domicile et notamment, la gestion des ouvrants, de la température et de la sécurité.

La multiplication des équipements domotiques a amené à utiliser des concentrateurs permettant de piloter de concert tous les équipements d'un même système.

Or, les concentrateurs existants utilisent tous une connexion à un serveur distant pour fonctionner. En d'autres termes, les concentrateurs existants agissent comme des relais entre l'équipement domotique et un serveur distant. Le réel pilotage de l'équipement domotique n'est pas réalisé par le concentrateur mais par le serveur distant.

L'utilisation systématique d'un serveur distant pose de nombreux problèmes.

Tout d'abord, la connexion au serveur distant impose l'utilisation d'une liaison internet.

En outre, l'utilisation d'un serveur distant pose aussi des problèmes de sécurité des données. En effet, les données transmises par les concentrateurs nécessitent la mise en place de mesures prenant en compte le risque de vol de données ou d'attaque cyber généralisée. Ces mesures sont plus complexes et donc coûteuse à mettre en place lorsqu'un serveur distant est intégrée dans une solution. De plus, l'utilisation d'un serveur distant présente aussi des risques de rupture de continuité de service. En effet, il est possible que le serveur soit arrêté (le plus souvent pour des raisons économiques ou de maintenance) ce qui par la même arrête le service fournit à l'utilisateur.

Ainsi, les systèmes connus qui imposent l'utilisation d'un serveur distant, imposent de fait d'avoir une connexion internet permanente et ne permettent pas de garantir la sécurité des données transmises et ne garantisse pas une continuité de service.

Dans ce contexte, il est nécessaire de fournir un procédé de contrôle d'un système domotique qui permette de s'affranchir de l'utilisation d'une connexion internet et qui permette de garantir la sécurité des données captées par le système domotique, et qui garantisse une continuité de service.

### EXPOSE DE L'INVENTION

A cet effet, selon un premier aspect, il est proposé un procédé de contrôle d'un système domotique comprenant une passerelle et au moins un équipement domotique connecté à la passerelle au travers d'un réseau local, la passerelle comprenant de la circuiterie électronique adaptée pour implémenter le procédé de contrôle. Le procédé de contrôle comprend au moins les étapes suivantes :
- (Etape 1) Associer l'équipement domotique à la passerelle
- (Etape 2) Enregistrer, dans la passerelle au moins un scénario conditionnel local de fonctionnement de l'équipement et au moins un équipement déclencheur associé au scénario ;
- (Etape 3) Recevoir, au travers du réseau local, au moins un message déclencheur provenant de l'au moins un équipement déclencheur associé au scénario conditionnel ;
- (Etape 4) Stocker l'au moins un message déclencheur reçu dans une mémoire temporaire de la passerelle ;
- (Etape 5) Activer l'exécution du scénario conditionnel associé à l'au moins un équipement déclencheur, au travers du réseau local ;
- (Etape 6) Supprimer l'au moins un message déclencheur reçu, de la mémoire temporaire.

Selon une disposition particulière, l'étape d'association comprend les étapes suivantes :
- (Etape 1.1) Recevoir une consigne d'association ou détecter automatique un signal radioélectrique émis par un équipement ;
- (Etape 1.2) Reconnaitre le signal émis et l'équipement émetteur ;
- (Etape 1.3) Enregistrer, dans une mémoire durable de la passerelle, la présence de l'équipement sur le réseau local

Selon une disposition particulière, l'étape 2 d'enregistrement comprend (étape 2.1) d'enregistrer, dans une mémoire durable de la passerelle, au moins un scénario associé à l'équipement et au moins un déclencheur associé au scénario

Selon une disposition particulière, le message déclencheur provenant de l'équipement déclencheur est une commande ou une information de changement d'état.

Selon une disposition particulière, à l'étape 2.1, le scénario est pré-enregistré dans une mémoire durable de la passerelle.

Selon une disposition particulière, à l'étape 2.1, le scénario est transmis à la passerelle par un terminal.

Selon une disposition particulière, le procédé comprend une étape 7 de réception et d'enregistrement d'un scénario modifié.

Selon une disposition particulière, le scénario modifié est transmis à la passerelle par un terminal.

Selon un autre aspect, il est aussi proposé une passerelle qui comprend de la circuiterie électronique pour implémenter un procédé comprenant au moins les étapes suivantes :
- (Etape 1) Associer l'équipement domotique à la passerelle
- (Etape 2) Enregistrer, dans la passerelle au moins un scénario conditionnel local de fonctionnement de l'équipement et au moins un équipement déclencheur associé au scénario ;
- (Etape 3) Recevoir, au travers du réseau local, au moins un message déclencheur provenant de l'au moins un équipement déclencheur associé au scénario conditionnel ;
- (Etape 4) Stocker l'au moins un message déclencheur reçu dans une mémoire temporaire de la passerelle ;
- (Etape 5) Activer l'exécution du scénario conditionnel associé à l'au moins un équipement déclencheur, au travers du réseau local ;
- (Etape 6) Supprimer l'au moins un message déclencheur reçu, de la mémoire temporaire.

Selon un autre aspect, il est aussi proposé système domotique comprenant une passerelle selon l'invention et au moins un équipement domotique.

Selon un autre aspect, il est aussi proposé un produit programme d'ordinateur comprenant des instructions de code de programme pour exécuter le procédé selon l'invention, lorsque ledit programme est exécuté depuis une passerelle selon l'invention.

Selon un autre aspect, il est aussi proposé un support de stockage non transitoire sur lequel est stocké un programme d'ordinateur comprenant des instructions de code de programme pour exécuter le procédé selon l'invention, lorsque lesdites instructions sont lues depuis ledit support de stockage non transitoire et exécutées par un processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un procédé de contrôle d'un système domotique ;
[Fig. 2] illustre schématiquement un système informatique adapté pour implémenter le procédé.

### EXPOSE DETAILLE DE MODES DE REALISATION

### Procédé de contrôle d'un système domotique

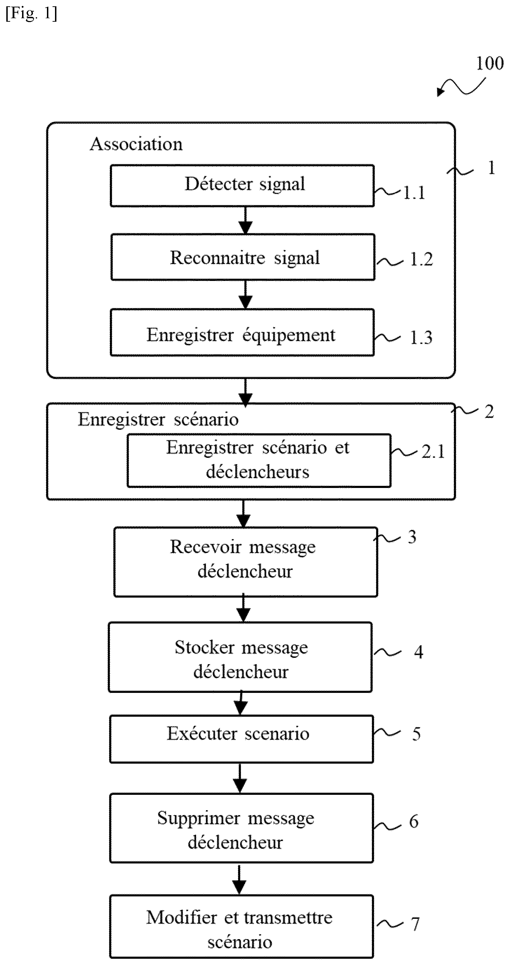

En référence à la Fig. 1, selon un premier aspect, il est proposé un procédé de contrôle d'un système domotique 2 qui sera décrit ci-après.

Le procédé 100 comprend au moins les étapes suivantes :
- (Etape 1) Associer l'équipement domotique à la passerelle
- (Etape 2) Enregistrer, dans la passerelle au moins un scénario conditionnel local de fonctionnement de l'équipement et au moins un équipement déclencheur associé au scénario ;
- (Etape 3) Recevoir, au travers du réseau local, au moins un message déclencheur provenant de l'au moins un équipement déclencheur associé au scénario conditionnel ;
- (Etape 4) Stocker l'au moins un message déclencheur reçu dans une mémoire temporaire de la passerelle ;
- (Etape 5) Activer l'exécution du scénario conditionnel associé à l'au moins un équipement déclencheur, au travers du réseau local ;
- (Etape 6) Supprimer l'au moins un message déclencheur reçu, de la mémoire temporaire.

Il est précisé que par scénario conditionnel, il est entendu une action ou un ensemble d'actions (scénario) qui s'exécutent lorsqu'un état ou un ensemble d'états a une valeur prédéfinie (déclencheur).

Un scénario conditionnel local est exécuté sur une passerelle, par opposition au scénario conditionnel distant qui est exécuté sur un serveur connecté à internet (cloud en anglais).

Ainsi, le procédé selon l'invention permet d'associer un équipement domotique à la passerelle et permet d'exécuter des scénarii conditionnels en utilisant uniquement un réseau local. Le procédé, selon l'invention, permet donc de s'affranchir de l'utilisation d'une connexion internet et permet de garantir la sécurité des données captées par le système domotique, en utilisant exclusivement un réseau local et en stockant les données sur la passerelle. De plus, l'utilisation exclusive du réseau local permet de garantir une continuité de service à un utilisateur.

Il est précisé que dans le présent document, par réseau local, il est entendu un réseau fonctionnant sans recours à un équipement distant (serveur ou processeur). En d'autres termes, par réseau local il est entendu tous les réseaux autres qu'Internet. En d'autres termes encore, par réseau local, il est entendu un réseau IP ou un réseau radioélectrique (par exemple : Wifi, X3D, Bluetooth, etc.).

### Etape 1 - Association

Selon une disposition particulière, l'étape d'association comprend les étapes suivantes :
- (Etape 1.1) Recevoir une consigne d'association ou détecter automatique un signal radioélectrique émis par un équipement ;
- (Etape 1.2) Reconnaitre le signal émis et l'équipement émetteur ;
- (Etape 1.3) Enregistrer, dans une mémoire durable de la passerelle, la présence de l'équipement sur le réseau local.

En d'autres termes, le procédé 100 permet la reconnaissance automatique d'un équipement domotique lorsqu'une consigne d'association est donnée à la passerelle. Selon une disposition particulière, l'association est effectuée dès que la passerelle reçoit une consigne d'association (typiquement via un terminal connecté à la passerelle au travers d'un réseau local ou distant). Selon une autre disposition particulière, l'association est réalisée automatiquement lorsqu'un équipement domotique émet un signal radioélectrique. Le signal est reconnu par la passerelle qui enregistre alors la présence de l'équipement sur le réseau. Il est précisé que la passerelle reconnait automatiquement l'équipement à partir du signal radioélectrique capté

Il est précisé que le signal radioélectrique capté peut, par exemple, être un signal radio de type WiFi ou X3D ou Zigbee, ou un signal infra-rouge, ou un signal envoyé au-travers d'une liaison physique (câble ou fibre optique).

Il est précisé que lorsqu'un équipement est déjà associé, le procédé peut sauter l'étape 1 et passer directement à l'étape 3.

### Etape 2 - Enregistrement

Une fois que l'équipement domotique est associé, le procédé comprend d'enregistrer, dans la passerelle au moins un scénario conditionnel local de fonctionnement de l'équipement et au moins un équipement déclencheur associé au scénario.

Selon une disposition particulière, l'étape 2 d'enregistrement comprend (étape 2.1) d'enregistrer, dans une mémoire durable de la passerelle, au moins un scénario associé à l'équipement et au moins un équipement déclencheur associé au scénario.

Selon une disposition particulière, l'étape 2.1 comprend d'enregistrer un fichier spécifique associé à l'équipement domotique associé. Ce fichier intègre chaque scénario associé à l'équipement domotique et intègre aussi chaque équipement déclencheur associé à chaque scénario.

Selon une disposition particulière, certains scénarii peuvent être pré-enregistrés dans une mémoire durable de la passerelle. Ainsi, selon cette disposition, lors de sa mise en service la passerelle comprend déjà un ou plusieurs scénarii pré-enregistrés. Ces scénarii pré-enregistrés peuvent par exemple concerner la gestion des ouvrants d'un logement ou des règles de chauffage. En cas d'association d'un équipement domotique compatible avec l'un de ces scénarii pré-enregistrés, le scénario compatible est associé à l'équipement. Ainsi, par exemple, la passerelle peut être livrée avec un scénario pré-enregistré de gestion d'un chauffage en fonction de consignes de températures et de consignes horaires. Dès que la passerelle associe un équipement de chauffage, le scénario de gestion du chauffage peut être associé à l'équipement de chauffage.

Selon un autre mode de réalisation, un scénario est transmis à la passerelle par un terminal à travers un réseau local, ou d'un réseau distant.

### Etape 3 - Réception d'un message déclencheur provenant d'un équipement déclencheur

Lorsqu'un équipement domotique est associé et que le (ou les) scenario associé à l'équipement domotique est enregistré, le procédé 100 comprend de permettre la réception, par la passerelle, au travers du réseau local, d'un message déclencheur provenant de l'équipement déclencheur.

Un message déclencheur provenant de l'équipement déclencheur est une commande ou une information de changement d'état de l'équipement déclencheur transmis au moyen d'un signal radioélectrique. Ce message déclencheur peut être une consigne de changement d'état (par exemple l'appui sur un interrupteur envoyant un état binaire) ou peut être une commande non binaire (par exemple une commande de température).

Selon une disposition particulière, l'équipement déclencheur est distinct de l'équipement domotique qui réalisera l'action associée au scénario. Par exemple, un capteur d'ouverture peut envoyer un signal déclencheur permettant d'exécuter un scénario pour une alarme.

### Etapes 4 à 6 - Exécution d'un scénario et gestion de la mémoire

Chaque message déclencheur reçu provenant d'un équipement déclencheur est placé en file d'attente dans une mémoire temporaire de la passerelle (Etape 4).

Si l'ensemble des messages déclencheurs nécessaires à l'exécution d'un scénario sont reçus, alors la passerelle transmet, au travers du réseau local, à l'équipement concerné, un ordre d'exécution du scénario (Etape 5).

D'une manière particulièrement avantageuse, la passerelle peut recevoir des messages déclencheurs émis selon certains types de signaux ou certains types de protocole, et la passerelle peut commander l'exécution d'un scénario en utilisant un autre type de signal et/ou de protocole.

En d'autres termes, la passerelle peut par exemple recevoir un message déclencheur en ZigBee et activer l'exécution d'un scénario en X3D.

Ainsi, la passerelle permet très avantageusement de faire le lien entre des équipements domotiques utilisant différents protocoles.

Après exécution du scénario, la file d'attente est nettoyée (Etape 6).

Selon une disposition particulière, la passerelle utilise un espace mémoire (appelé Heap en anglais) qui permet une allocation dynamique de la mémoire. Chaque espace réservé de mémoire est accessible par une adresse et donne accès à un ensemble continu d'octets. Lors de sa libération, chaque espace est de nouveau disponible pour être réutilisé. Une allocation standard dans la Heap se fait de manière continue. Chaque espace mémoire réservé se suit. Dans un environnement contraint, il est primordial de libérer chaque espace mémoire non utilisé pour exécuter d'autres actions.

### Modification d'un scénario

Selon une disposition particulière, le procédé comprend une étape 7 de modification et d'enregistrement d'un scénario.

Typiquement, la modification peut être effectuée à partir d'un terminal connecté au réseau local (ou via un réseau distant). Selon un mode de réalisation, la modification peut être effectuée en utilisant une application dédiée fonctionnant sur un terminal mobile connecté à la passerelle via le réseau local ou via un réseau distant.

### Système domotique

Le procédé de contrôle 100 est adapté pour être implémenté par un système domotique 2.

Selon une disposition particulière, le système domotique comprend une passerelle et au moins un équipement domotique.

Selon une disposition particulièrement avantageuse, les équipements domotiques sont connectés à la passerelle uniquement au travers d'un réseau local. La connexion à la passerelle peut être une connexion sans fils ou une connexion physique (câble ou fibre).

Il s'agit d'une disposition particulièrement avantageuse de l'invention, en effet, en d'autres termes, le système domotique peut fonctionner sans connexion à un réseau externe de type Internet. En d'autres termes encore, le système domotique fonctionne sans recourir à une communication à un serveur distant.

### Passerelle

Selon une disposition particulière, la passerelle comprend une carte électronique (système informatique 200) adaptée pour implémenter un procédé 100.

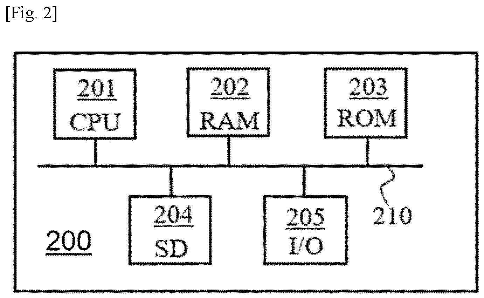

Tel que schématisé sur la Fig. 2, le système informatique 200 peut comporter, reliés par un bus de communication 210 : un processeur 201 ; une mémoire vive 202 ; une mémoire morte 203, par exemple de type ROM (« Read Only Memory » en anglais) ou EEPROM (« Electrically-Erasable Programmable Read Only Memory » en anglais) ; une unité de stockage 204, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces d'entrées-sorties 205.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque le système informatique 200 est mis sous tension, le processeur 201 est capable de lire de la mémoire vive 202 des instructions et de les exécuter. Ces instructions forment un programme d'ordinateur permettant l'implémentation, par le processeur 201, du procédé 100.

Tout ou partie du procédé 100 peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant dédié, par exemple un composant FPGA (« Field Programmable Gate Array » en anglais) ou ASIC (« Application-Specific Integrated Circuit » en anglais). D'une manière générale, le système informatique 200 comporte de la circuiterie électronique adaptée et configurée pour implémenter, sous forme logicielle et/ou matérielle, le procédé 100 en relation avec le système informatique 200 en question.

D'une manière particulièrement avantageuse, l'exécution du procédé 100 nécessite peu de ressources en termes de puissance de calcul ou de quantité de mémoire. Ainsi, le procédé 100 peut être exécuté par un dispositif 200 présentant des capacités dites limitées et peu consommatrices d'énergie et ne nécessite pas l'utilisation de serveurs distants.

## Revendications

1. Procédé (100) de contrôle d'un système domotique comprenant une passerelle et au moins un équipement domotique connecté à la passerelle au travers d'un réseau local, la passerelle comprenant de la circuiterie électronique adaptée pour implémenter le procédé de contrôle, le procédé de contrôle étant **caractérisé en ce qu'**il comprend au moins les étapes suivantes :
- (Etape 1) Associer l'équipement domotique à la passerelle
- (Etape 2) Enregistrer, dans la passerelle au moins un scénario conditionnel local de fonctionnement de l'équipement et au moins un équipement déclencheur associé au scénario ;
- (Etape 3) Recevoir, au travers du réseau local, au moins un message déclencheur provenant de l'au moins un équipement déclencheur associé au scénario conditionnel ;
- (Etape 4) Stocker l'au moins un message déclencheur reçu en file d'attente dans une mémoire temporaire de la passerelle, ladite mémoire étant gérée par allocation dynamique ;
- (Etape 5) Activer l'exécution du scénario conditionnel associé à l'au moins un équipement déclencheur, au travers du réseau local ;
- (Etape 6) Nettoyer la file d'attente en supprimant l'au moins un message déclencheur reçu, de la mémoire temporaire.

2. Procédé (100) de contrôle selon la revendication 1 dans lequel l'étape d'association comprend les étapes suivantes :
- (Etape 1.1) Recevoir une consigne d'association ou détecter automatique un signal radioélectrique émis par un équipement ;
- (Etape 1.2) Reconnaitre le signal émis et l'équipement émetteur ;
- (Etape 1.3) Enregistrer, dans une mémoire durable de la passerelle, la présence de l'équipement sur le réseau local

3. Procédé (100) selon l'une quelconque des revendications précédentes dans lequel l'étape 2 d'enregistrement comprend (étape 2.1) d'enregistrer, dans une mémoire durable de la passerelle, au moins un scénario associé à l'équipement et au moins un déclencheur associé au scénario

4. Procédé (100) selon l'une quelconque des revendications précédentes dans lequel le message déclencheur provenant de l'équipement déclencheur est une commande ou une information de changement d'état.

5. Procédé (100) selon la revendication 2, dans lequel à l'étape 2.1, le scénario est pré-enregistré dans une mémoire durable de la passerelle.

6. Procédé (100) selon la revendication 2, dans lequel à l'étape 2.1, le scénario est transmis à la passerelle par un terminal.

7. Procédé (100) selon l'une quelconque des revendications précédentes, comprenant une étape 7 de réception et d'enregistrement d'un scénario modifié.

8. Procédé (100) selon la revendication 6, dans lequel le scénario modifié est transmis à la passerelle par un terminal.

9. Passerelle **caractérisée en ce qu'**elle comprend de la circuiterie électronique (200) pour implémenter un procédé comprenant au moins les étapes suivantes :
- (Etape 1) Associer l'équipement domotique à la passerelle
- (Etape 2) Enregistrer, dans la passerelle au moins un scénario conditionnel local de fonctionnement de l'équipement et au moins un équipement déclencheur associé au scénario ;
- (Etape 3) Recevoir, au travers du réseau local, au moins un message déclencheur provenant de l'au moins un équipement déclencheur associé au scénario conditionnel ;
- (Etape 4) Stocker l'au moins un message déclencheur reçu en file d'attente dans une mémoire temporaire de la passerelle, ladite mémoire temporaire étant gérée par allocation dynamique ;
- (Etape 5) Activer l'exécution du scénario conditionnel associé à l'au moins un équipement déclencheur, au travers du réseau local ;
- (Etape 6) Nettoyer la file d'attente en supprimant l'au moins un message déclencheur reçu, de la mémoire temporaire.

10. Système domotique comprenant une passerelle selon la revendication 9 et au moins un équipement domotique.

11. Produit programme d'ordinateur comprenant des instructions de code de programme pour exécuter le procédé (100) selon l'une quelconque des revendications 1 à 8, lorsque ledit programme est exécuté depuis une passerelle selon la revendication 9.

12. Support de stockage non transitoire sur lequel est stocké un programme d'ordinateur comprenant des instructions de code de programme pour exécuter le procédé (100) selon l'une quelconque des revendications 1 à 8, lorsque lesdites instructions sont lues depuis ledit support de stockage non transitoire et exécutées par un processeur.
